# EUROPEAN PATENT APPLICATION

(11) **EP 2 213 446 A1**
(43) Date of publication of application: **04.08.2010**
(21) Application number: 08838019.1
(22) Date of filing: 10.10.2008
(51) Int. Cl.: B29C 73/24, B29C 73/02

(54) **METHOD OF RECOVERING SEALANT, AND WEDGE JIG**

(30) Priority: 10.10.2007 JP 2007264587; 04.12.2007 JP 2007313649; 07.05.2008 JP 2008121292; 20.06.2008 JP 2008161321; 22.08.2008 JP 2008214350
(71) Applicant: Bridgestone Corporation, Tokyo 104-8340 (JP)
(72) Inventor: IZUMOTO, Ryuji, Tokyo 104-8340 (JP); EGUCHI, Shinichi, Tokyo 104-8340 (JP); HIRATA, Narukuni, Tokyo 104-8340 (JP); SENNO, Yoshikazu, Tokyo 104-8340 (JP); MINOSHIMA, Haruki, Tokyo 104-8340 (JP)
(74) Representative: Whalley, Kevin
(86) International application number: PCT/JP2008/068471
(87) International publication number: WO 2009/048140

(57) **Abstract**

Sealant in a tire/rim assembly is simply recovered without contaminating the surroundings. With a tire/rim assembly (10) kept sideways, locking between an upper-side bead portion (14) and a rim (18) is released. Next, with the tire/rim assembly (10) kept longitudinally, a tire lever (33) is inserted between the released bead portion (14) and rim (18) to form a clearance (34) between the bead portion (14) and the rim (18). A tube (26) is inserted into the tire through the clearance (34) to recover by sucking sealant (20) in the tire via the tube (26).

## Description

### TECHNICAL FIELD

The present invention relates to a method of recovering sealant for recovering a sealant within a tire/rim assembly, and to a wedge jig that is used when recovering sealant.

### BACKGROUND TECHNOLOGY

Tire sealing devices have come into general use in recent years that, when a tire/rim assembly that is mounted to a vehicle is punctured, inject a liquid sealant (a puncture repair liquid) into the tire/rim assembly so as to repair the punctured hole of the tire, and increase (pump-up) the internal pressure to a predetermined reference pressure. Because sealant remains within a tire/rim assembly that has been repaired by a tire sealing device such as described above, when the tire is removed as is from the rim and is to be replaced, there is the problem that the sealant scatters on the surroundings.
Thus, the following four methods, for example, have been thought of as methods for overcoming such a drawback at the time of replacing a tire.

(1) Introducing a polymeric coagulant into the tire from a valve, and solidifying and recovering the sealant within the tire (Patent Document 1).
(2) After placing the tire/rim assembly sideways and disassembling the rim, introducing a coagulant into the tire from the gap between the rim and the tire, and solidifying and recovering the sealant within the tire.
(3) After cutting the rubber portion of the valve (only in cases in which the valve main body and the rim are connected by a rubber part), inserting a syringe, a hose or the like in from the hole of the rim after the valve main body has been removed, and sucking-out and recovering the sealant within the tire (Patent Documents 2 through 4).
(4) After placing the tire/rim assembly sideways and disassembling the rim, inserting a syringe, a hose or the like in from the gap between the rim and the tire, and sucking-out and recovering the sealant within the tire.
   Patent Document 1: Japanese Patent Application Laid-Open No. 2003-118009
   Patent Document 2: Japanese Patent Application Laid-Open No. 2003-127242
   Patent Document 3: Japanese Patent Application Laid-Open No. 2003-311846
   Patent Document 4: Japanese Patent Application Laid-Open No. 2004-114524

### DISCLOSURE OF THE INVENTION

### PROBLEMS TO BE SOLVED BY THE INVENTION

In method (1), if the amount of sealant at the interior is not known, it is difficult to determine the injection amount of the polymeric coagulant, and cases in which the sealant does not coagulate also arise.

In the case of (3), if the valve main body and the rim are connected by a metal part, it is difficult to remove the valve main body from the rim.

Further, in methods (2), (4), because both bead portions are taken-off of the rim, when the lower bead portion is taken-off of the rim, there are cases in which the sealant at the interior flows-out via the gap between the lower bead portion and the rim. The present invention was made in order to overcome the above-described problems, and an object thereof is to provide a method of recovering sealant that can recover sealant of a tire/rim assembly simply without contaminating the surroundings, and a wedge jig.

### MEANS FOR SOLVING THE PROBLEMS

The invention of claim 1 is a method of recovering sealant for recovering a liquid sealant from an interior of a tire/rim assembly in which a pneumatic tire is mounted to a rim, including: a first step of canceling engagement of one bead portion and the rim; a second step of forming a gap between the one bead portion and the rim; and a third step of inserting a suction means from the gap into the tire/rim assembly interior, and sucking the sealant.

Next, the method of recovering sealant of claim 1 is described.
First, in the first step, the engagement of one bead portion and the rim is cancelled.
In the second step, a gap is formed between the one bead portion and the rim.
In the third step, a suction means is inserted into the tire/rim assembly interior via the gap formed in the second step, and the sealant at the interior is sucked and recovered.

Note that, if both bead portions are taken-off of the rim, there is the problem that, when the tire/rim assembly is oriented sideways for example, the sealant at the interior flows-out to the exterior via the gap between the rim and the lower bead portion. However, in the method of recovering sealant of claim 1, because the other bead portion is in a state of remaining engaged with the rim, even if the tire/rim assembly is oriented sideways for example, if the one bead portion is set at the upper side of the other bead portion, the sealant at the interior does not flow-out to the exterior.

The invention of claim 2 has the feature that, in the method of recovering sealant of claim 1, in the second step, the tire/rim assembly that has undergone the first step is held at a tire changer, and a member for forming a gap is inserted-in between the one bead portion and the rim.

Next, the method of recovering sealant of claim 2 is described.
In the method of recovering sealant of claim 2, in the second step, because the tire/rim assembly is held at a tire changer, when the member is inserted-in between the bead portion and the rim, the tire/rim assembly can be made to be stable, and the work is facilitated. Further, because existing equipment can be used when holding the tire/rim assembly, there is no need for new equipment investment.

The invention of claim 3 has the feature that, in the method of recovering sealant of claim 1, in the second step, after the tire/rim assembly that has undergone the first step is disposed so as to be oriented vertically, a member for forming a gap is inserted-in between the one bead portion and the rim.

Next, the method of recovering sealant of claim 3 is described.
In the method of recovering sealant of claim 3, in the second step, the tire/rim assembly that has undergone the first step is disposed so as to be oriented vertically, and the member is inserted between the one bead portion and the rim, and the gap is formed. Note that, due to the tire/rim assembly being disposed so as to be oriented vertically, the sealant gathers at the lower portion of the tire interior (the inner side of the tread portion), and does not flow-out to the tire exterior.

The invention of claim 4 is the method of recovering sealant of claim 1 that has the feature that, in the second step, the tire/rim assembly is disposed so as to be oriented sideways with the one bead portion, at which engagement with the rim is cancelled, being at an upper side, and thereafter, a member for forming a gap is inserted-in between the one bead portion, at which engagement with the rim is cancelled, and the rim.

Next, the method of recovering sealant of claim 4 is described.
In the method of recovering sealant of claim 4, in the second step, the tire/rim assembly is disposed so as to be oriented sideways with the one bead portion, at which engagement with the rim is cancelled, being at an upper side, and the member is inserted between the one bead portion and the rim, and the gap is formed. Note that, due to the tire/rim assembly being disposed so as to be oriented sideways, the sealant gathers at the lower portion of the tire interior (the inner side of the side portion), but because the lower bead portion is not taken-off of the rim, the sealant at the interior does not flow-out to the tire exterior.

The invention of claim 5 has the feature that, in the method of recovering sealant of claim 1, in the second step, the tire/rim assembly is disposed at an incline with the one bead portion, at which engagement with the rim is cancelled, being at an upper side, and thereafter, a member for forming a gap is inserted-in between the one bead portion, at which engagement with the rim is cancelled, and the rim.

Next, the method of recovering sealant of claim 5 is described.
In the method of recovering sealant of claim 5, in the second step, the tire/rim assembly is disposed at an incline with the one bead portion, at which engagement with the rim is cancelled, being at an upper side, and the member is inserted between the one bead portion and the rim, and the gap is formed. Note that, due to the tire/rim assembly being disposed at an incline, the sealant gathers at the lower portion of the tire interior (the inner side of the shoulder portion), but because the lower bead portion is not taken-off of the rim, the sealant at the interior does not flow-out to the tire exterior.

In the invention of claim 6, in the method of recovering sealant of claim 4 or claim 5, the member is a wedge, and, in the third step, a tube serving as the suction means is inserted into the tire from the gap, and sucks the sealant within the tire.
Next, the method of recovering sealant of claim 6 is described.
In the second step, the wedge is inserted between the bead portion and the rim. Due thereto, at both sides of the wedge, a gap is formed between the rim and the bead portion.
Note that, because it is difficult to confirm, from the exterior, the position of the liquid surface of the sealant within the tire, when the wedge is inserted, it is preferable to place the tire/rim assembly vertically and leave it for a while, and, after the sealant at the interior gathers at the lower portion within the tire, to insert the wedge above the axis of rotation.

In the next third step, the tube is inserted into the tire from a gap at the side of the wedge that is formed between the rim and the bead portion, and sucks the sealant within the tire.

In the method of recovering sealant of claim 6, because there is no need to cut the tire valve by a cutter or the like, the rim is not damaged.

In the invention of claim 7, in the method of recovering sealant of claim 6, a lubricant is provided at a region at which the wedge and the pneumatic tire contact.

When the wedge is inserted between the bead portion and the rim, a portion of the bead portion is pushed by the wedge and elastically deforms toward the tire inner side.

At this time, if the pneumatic tire does not slide on the surface (the inclined surface) of the wedge, the force by which the pneumatic tire attempts to return to its original shape acts on the region of contact between the pneumatic tire and the wedge. As a result, force that attempts to take the wedge off of the rim works on the wedge, and therefore, there are cases in which the wedge comes off of the rim if the wedge is not held by a hand or the like.

In the method of recovering sealant of claim 7, by providing lubricant at the region at which the wedge and the pneumatic tire contact, the frictional resistance of the region of contact between the wedge and the pneumatic tire can be reduced, and the pneumatic tire can be slid easily at the surface of the wedge that is disposed between the pneumatic tire and the rim.
Due to the pneumatic tire sliding on the surface (the inclined surface) of the wedge, the force from the pneumatic tire is released, and force that attempts to take the wedge off of the rim does not work on the wedge. Accordingly, the inserted wedge does not come off of the rim even if the wedge is not held by a hand or the like, and the work of sucking the sealant within the tire from the gap between the tire and the rim becomes easy.

In the invention of claim 8, in the method of recovering sealant of claim 7, the lubricant is provided at the wedge.

In the method of recovering sealant of claim 8, the pneumatic tire can be slid by the lubricant that is provided at the pneumatic tire contacting region of the wedge.

In the invention of claim 9, in the method of recovering sealant of any one of claim 1 through claim 8, in the first step, the tire/rim assembly is held at a tire changer, and the engagement of the one bead portion and the rim is cancelled at the tire changer.

Next, the method of recovering sealant of claim 9 is described.
In the method of recovering sealant of claim 9, in the first step, the tire/rim assembly is held at a tire changer, and the engagement of upper bead portion and the rim is cancelled at the tire changer. Accordingly, the work of canceling the engagement of the bead portion and the rim can be carried out simply. Further, because the work of canceling the engagement of the bead portion and the rim can be carried out by using existing equipment, there is no need for new equipment investment.

The invention of claim 10 is a wedge jig that is used in the method of recovering sealant of any one of claim 6 through claim 8 and that is for forming, between a bead portion and a rim, a gap into which a tube for sucking sealant can be inserted, including: a groove portion into which a flange of the rim is inserted; and a pushing surface that, when the flange is inserted in the groove portion, pushes a side surface of the bead portion toward a rim transverse direction inner side, and forms a gap between the rim and the bead portion.

Next, the operation of the wedge jig of claim 10 is described.
In the wedge jig of claim 10, because the flange of the rim can be inserted in the groove portion, the wedge jig is inserted between the rim and the bead portion, and even if the pushing surface of the wedge jig receives reaction force directed toward the tire axial direction outer side from the bead portion, because the flange of the rim is inserted in the groove portion, the rim abuts the groove wall of the groove portion, and the wedge jig can be prevented from coming off toward the tire axial direction outer side.

In the invention of claim 11, in the wedge jig of claim 10, an angle θ that is formed by a bottom surface, at which the groove portion is formed, and the pushing surface is set within a range of 30° to 60°.

Next, operation of the wedge jig of claim 11 is described.
If the angle θ that is formed by the bottom surface, at which the groove portion is formed, and the pushing surface is set within a range of 30° to 60°, when the wedge jig is inserted in the gap between the pneumatic tire and the rim, the tire side surface can be easily slid at the inclined surface, and the rotational force that attempts to take the wedge jig off of the rim can be released, and the wedge jig can be prevented from coming off.

In the invention of claim 12, in the wedge jig of claim 10 or claim 11, when the flange is inserted in the groove portion, the pushing surface is positioned further toward the rim transverse direction inner side than a bead seat of the rim.

Next, operation of the wedge jig of claim 12 is described.
When the flange is inserted in the groove portion, the pushing surface of the wedge jig of claim 12 is positioned further toward the rim transverse direction inner side than the bead seat of the rim. Therefore, the bead portion can be pushed-in deeply toward the tire transverse direction inner side, and the gap between the rim and the bead portion can be made to be large.

In the invention of claim 13, the wedge jig of claim 12 includes: a through-hole through which the tube can be inserted, wherein, when the flange is inserted in the groove portion, one end portion of the through-hole faces a tire inner side, and another end faces a tire outer side.

Next, operation of the wedge jig of claim 13 is described.
When the wedge jig of claim 13 is inserted between the bead portion and the rim and the flange is inserted in the groove portion, one end portion of the through-hole that is formed in the wedge jig faces the tire inner side, and another end faces the tire outer side. Accordingly, if a tube is inserted into the through-hole of the wedge jig, the tube can be inserted into the tire.

### EFFECTS OF THE INVENTION

As described above, in accordance with the method of removing sealant and the wedge jig of the present invention, there is the excellent effect that the recovery of sealant of a tire/rim assembly can be carried out simply without contaminating the surroundings.

### BRIEF DESCRIPTION OF THE DRAWINGS

Fig. 1 is a cross-sectional view of a tire/rim assembly into which a sealant relating to a first embodiment is introduced.
Fig. 2 is a cross-sectional view of the tire/rim assembly in which an upper bead portion is dropped-in.
Fig. 3 is a cross-sectional view of the tire/rim assembly in which the upper bead portion is brought-up.
Fig. 4 is a cross-sectional view of the tire/rim assembly that is oriented vertically and at which a gap is formed between a rim and a bead portion.
Fig. 5 is a cross-sectional view of the tire/rim assembly, and shows a state in which sealant is being sucked and recovered from the gap.
Fig. 6 is a cross-sectional view of the tire/rim assembly, and explains a method of recovering sealant relating to another embodiment.
Fig. 7 is a perspective view of a wedge jig relating to a second embodiment.
Fig. 8 is a perspective view of a tire/rim assembly in which the wedge jig relating to the second embodiment is inserted.
Fig. 9 is a cross-sectional view of the tire/rim assembly in which the wedge jig relating to the second embodiment is inserted.
Fig. 10 is a perspective view of a wedge jig relating to a third embodiment.
Fig. 11 is a perspective view of the tire/rim assembly in which the wedge jig relating to the third embodiment is inserted.
Fig. 12 is a cross-sectional view of the tire/rim assembly in which the wedge jig relating to the third embodiment is inserted. Fig. 13 is a perspective view of the tire/rim assembly in which a wedge jig relating to a fourth embodiment is inserted.
Fig. 14 is a perspective view of the tire/rim assembly in which the wedge jig is inserted.
Fig. 15 is a cross-sectional view of the tire/rim assembly in which a jig relating to a sixth embodiment is inserted.
Fig. 16 is a cross-sectional view of the tire/rim assembly in which a jig relating to a modified example of the sixth embodiment is inserted.

### PREFERRED FORMS FOR IMPLEMENTING THE INVENTION

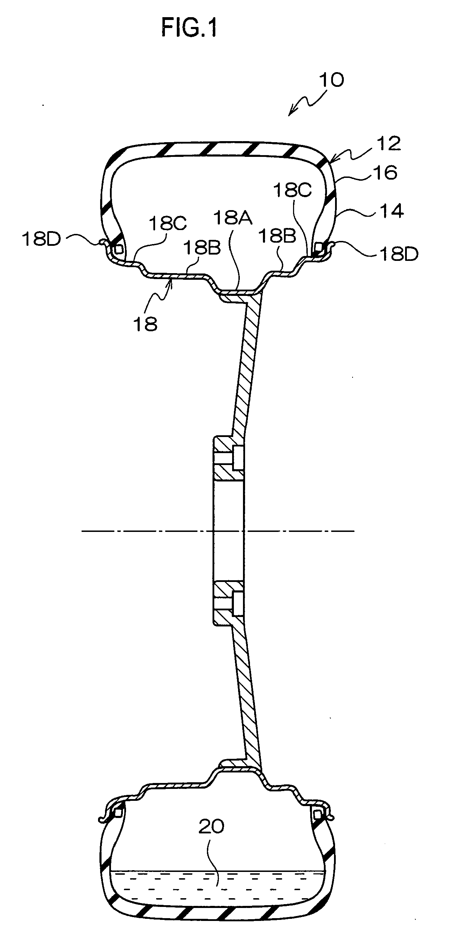

[First Embodiment]
Hereinafter, a first embodiment of a method of recovering sealant of the present invention is described in detail in accordance with Fig. 1 through Fig. 5 with reference to the drawings.

In Fig. 1, reference numeral 10 is a tire/rim assembly, reference numeral 12 is a pneumatic tire, reference numeral 14 is a bead portion, reference numeral 16 is a tire side portion, reference numeral 18 is a rim, reference numeral 18A is a drop of the rim 18, reference numeral 18B is a well portion of the rim 18, reference numeral 18C is a bead seat portion of the rim 18, and reference numeral 18D is a flange of the rim 18.

Here, the outer diameter of the well portion 18B is set to be smaller than the outer diameter of the bead seat portion 18C, and the outer diameter of the drop 18A is set to be smaller than the outer diameter of the well portion 18B. Further, the outer diameter of the drop 18A is set to be smaller than the inner diameter of the bead portion 14.

Further, reference numeral 20 is a liquid sealant for repairing a puncture. The sealant 20 is structured, for example, by a rubber latex being dispersed in a colloid form in a liquid component such as water or the like. Various types of such a sealant 20 are currently on the market, and representative sealants are sealants that include, for example, NR (natural rubber) latex, SBR (styrene butadiene rubber) latex, NBR (acrylic nitrile butadiene rubber) latex or the like, and whose main component is an aqueous solution to which is added a resin based adhesive that is added in the state of an aqueous dispersing agent or an aqueous emulsion. Antifreezing agents such as glycol, ethylene glycol, propylene glycol and the like, pH adjusting agents, emulsifying agents, stabilizing agents, and the like are generally added in such an aqueous solution. Moreover, as needed, fiber materials formed from polyester, polypropylene, glass or the like, whiskers, filling agents (fillers) formed from calcium carbonate, carbon black or the like, particles of silicate or polystyrene, or the like are added in order to improve the sealability of the puncture hole.

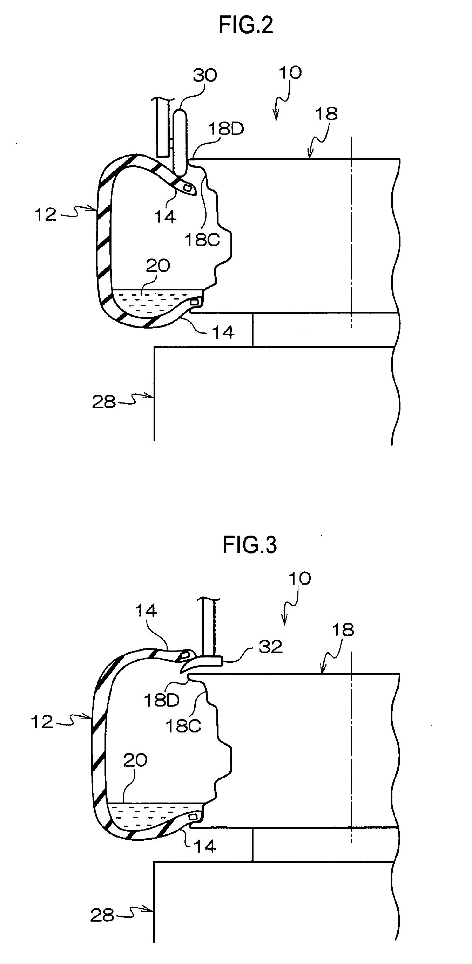

Next, the steps of recovering the sealant 20 from the tire/rim assembly 10 are described.
(1) First, as shown in Fig. 2, the tire/rim assembly 10 is oriented sideways and mounted to a tire changer 28. Thereafter, the upper bead portion 14 is pushed downward by a roller 30 of the tire changer 28, the upper bead portion 14 comes off of the bead seat portion 18C of the rim 18, and, as shown in Fig. 3, the upper bead portion 14 is pulled-up above the upper flange 18D by a lever 32 of the tire changer 28, and the engagement of the upper bead portion 14 and the rim 18 is canceled (step 1 of the present invention).
The tire changer 28 that is used here is a tire changer of a general structure that holds the tire/rim assembly 10 so as to be oriented sideways (with the axis of rotation being in the vertical direction).
Note that, although the sealant 20 is contained within the tire/rim assembly 10, the lower bead portion 14 remains engaged with (is tightly contacting) the rim 18, and the sealant 20 within the tire/rim assembly does not leak-out to the exterior.

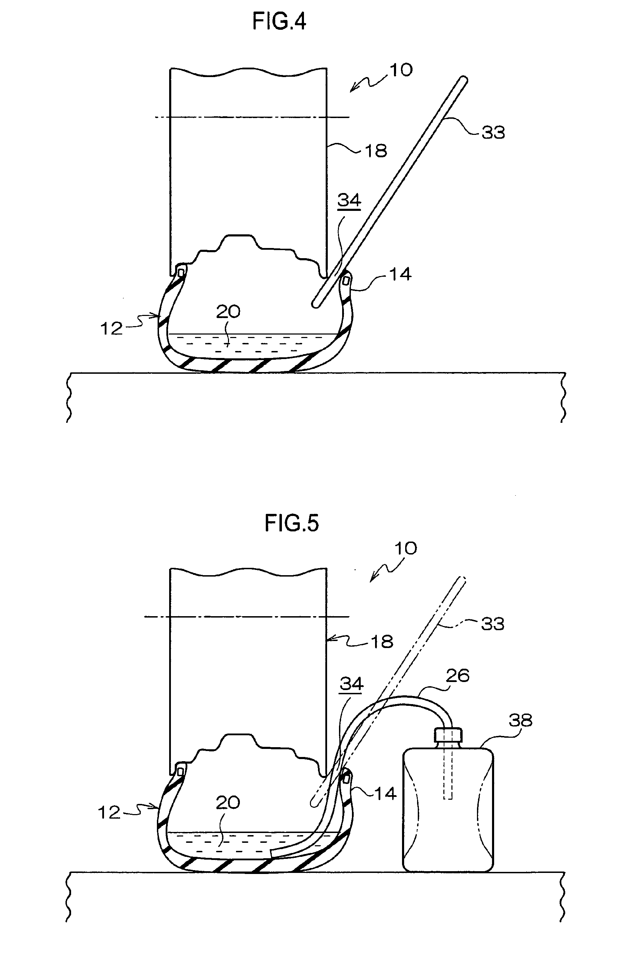

(2) Next, the tire/rim assembly 10 that has undergone the first step is taken-off of the tire changer 28, and, for example, is placed on the floor or the like so as to be oriented vertically as shown in Fig. 4. Note that, when the tire/rim assembly 10 is oriented vertically, the sealant 20 at the interior gathers at the lower portion within the tire. Then, for example, a tire lever 33 is inserted-in between the removed bead portion 14 and the rim 18 and brought down, and forms a gap 34 between the bead portion 14 and the rim 18 (the second step of the present invention).

(3) Next, as shown in Fig. 5, one end of a tube 26 is inserted into the tire from the gap 34, and the other end of the tube 26 is connected to an elastically deformable container 38. The container 38 is formed from a flexible synthetic resin or the like. Note that the one end of the tube 26 is disposed so as to reach the tire floor portion. Then, the container 38 is compressed (crushed) by a hand or the like and is elastically deformed, and the hand is successively relaxed and the container 38 opened. The container 38 thereby expands and the pressure of the container decreases, and therefore, the sealant 20 within the tire is sucked into the container 38. By repeating this plural times, all of the sealant 20 within the tire is removed and can be recovered in the container 38 (the third step of the present invention).
In this way, in the present embodiment, the sealant 20 within the tire can be recovered easily without cutting the tire valve by a cutter or the like and damaging the rim 18, and further, regardless of the type of the tire valve as well.

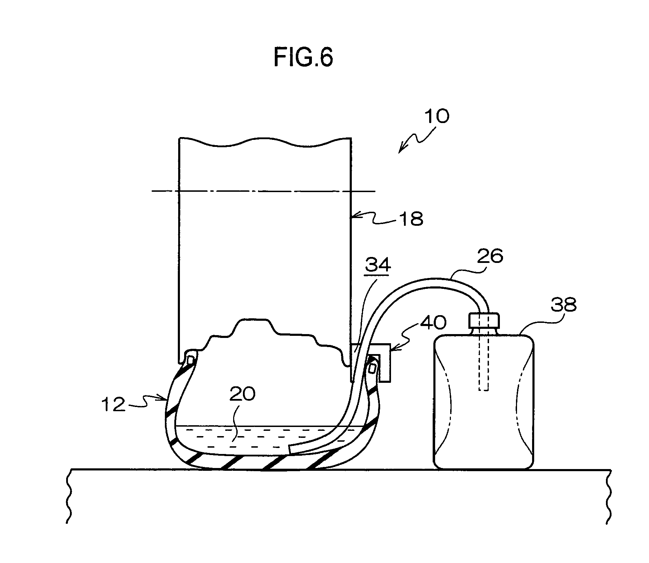

[Other Embodiments]
In the above-described embodiment, the tire lever 33 is inserted-in between the bead portion 14 and the rim 18 in order to form the gap 34 between the bead portion 14 and the rim 18, but the shape of the member that is inserted-in between the bead portion 14 and the rim 18 is not limited in the present invention. For example, a substantially U-shaped jig 40 such as shown in Fig. 6 may be inserted-in between the bead portion 14 and the rim 18.

In the above-described embodiment, the tire/rim assembly 10 is oriented sideways and held at the tire changer 28, and the engagement between the upper bead portion 14 and the rim 18 of the tire/rim assembly 10 that is oriented sideways is canceled by using the tire changer 28, and thereafter, the tire/rim assembly 10 is disposed on the floor or the like so as to be oriented vertically, and the tire lever 33 is inserted-in between the bead portion 14 and the rim 18 and forms the gap 34. However, the present invention is not limited to this, and the tire/rim assembly 10 may be disposed on the floor or the like so as to be oriented sideways with the removed bead portion 14 being at the upper side, and a member such as the tire lever 33 or the like may be inserted-in between the upper bead portion 14 and the rim 18, and the gap 34 may be formed. Or, the tire/rim assembly 10 may be disposed at an incline with the removed bead portion 14 being at the upper side, and a member such as the tire lever 33 or the like may be inserted-in between the upper bead portion 14 and the rim 18, and the gap 34 may be formed.
Further, the tire/rim assembly 10 may be oriented sideways and held at the tire changer 28, and the engagement between the upper bead portion 14 and the rim 18 of the tire/rim assembly 10 that is oriented sideways may be cancelled by using the tire changer 28, and thereafter, a member such as the tire lever 33 or the like may be inserted-in between the bead portion 14 and the rim 18 with the tire/rim assembly 10 remaining held at the tire changer 28, and the gap 34 may be formed.
In all of the above cases, it suffices to remove the sealant 20 at the interior after forming the gap 34.

In the above-described embodiment, the engagement between the bead portion 14 and the rim 18 is cancelled by using the tire changer 28, but it is possible for the canceling of the engagement between the bead portion 14 and the rim 18 to not use the tire changer 28.
In the above-described embodiment, the sealant 20 is recovered by using the container 38, but the present invention is not limited to this, and the sealant 20 may be sucked and recovered by a vacuum or the like.

(Experimental Example 1)
A method of recovering sealant of an example in accordance with the present invention and a conventional method of recovering sealant were implemented, and a comparison of workability was carried out. The results are as shown in following Table 1. The "valve cutting + coagulant" in the form column means that a coagulant is thrown-into the interior from the hole after the valve is removed, and "valve cutting + syringe" means that the sealant is sucked-out by a syringe from the hole after the valve is removed. Further, "rim disassembling + coagulant" means that a gap is formed between the tire and the rim, and thereafter, a coagulant is thrown-into the interior from this gap, and "rim disassembling + syringe" means that a gap is formed between the tire and the rim, and thereafter, the sealant is sucked-out by a syringe from this gap.

On the other hand, "low flat tire" in the workability column means using a tire whose flatness rate is less than or equal to 50%, and "metal valve" is a structure in which the valve main body is fixed to the rim by a screw, a nut or the like, and therefore, means a structure that is difficult to be taken-off or cannot be taken-off only from the rim outer side. Further, "○" in the workability column means that the workability is good, and "x" means that the workability is poor or the work cannot be carried out.

**[Table 1]**

| | Form | workability | |
|---|---|---|---|
| | | metal valve | low flat tire |
| example | while oriented sideways, take off upper bead → orient vertically, and insert tube in from gap, and suck sealant | ○ | ○ |
| conventional example 1 | valve cutting + coagulant tire oriented vertically | difficult to remove or impossible to remove from exterior | ○ |
| conventional example 2 | valve cutting + syringe tire oriented vertically | difficult to remove or impossible to remove from exterior | ○ |
| conventional example 3 | rim disassembling + coagulant tire oriented sideways | ○ | × |
| conventional example 4 | rim disassembling + syringe tire oriented sideways | ○ | × |

There are cases in which the methods of conventional examples 1, 2 cannot be applied to a rim using a metal valve.

In the methods of conventional examples 3, 4, in a case in which the tire is low flat (e.g., a flatness rate of less than or equal to 50%), when rim disassembly is carried out and the gap is formed between the lower bead portion of the tire and the rim, the sealant at the interior leaks-out from this gap, and the surroundings, such as the tire changer and the like, are contaminated.

Note that, in a tire having a high flatness rate (e.g., a flatness rate exceeding 50%), the radius of curvature of the tire side portion is small in comparison with that of a low flat tire, and, when the tire is oriented sideways, a recess, that is relatively deep in comparison with that of a low flat tire, is formed at the inner side of the lower tire side portion, and therefore, the sealant gathers in this recess when the tire is oriented sideways, and therefore, the possibility of the sealant leaking-out to the exterior via this gap is low even when the gap is formed between the bead portion and the rim. However, in a tire having a low flatness rate, in comparison with a tire having a high flatness rate, the radius of curvature of the tire side portion is large, and, when the tire/rim assembly is placed sideways, hardly any recess that the sealant gathers in is formed at all at the inner side of the lower tire side portion, and therefore, when the liquid surface of the sealant is at the upper side of the lower bead portion (see Fig. 2), when the gap is formed between the lower bead portion and the rim, the sealant leaks-out from this gap.
In the present invention, sealant can be recovered simply regardless of the type of valve and the flatness rate of the tire, and without contaminating the surroundings.

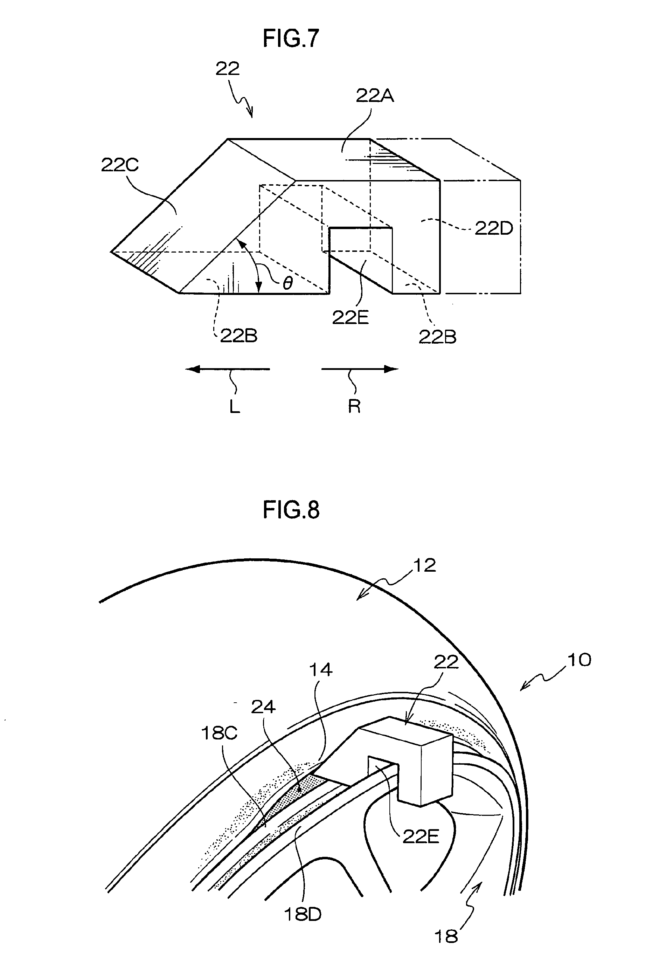

[Second Embodiment]
A second embodiment of a method of recovering sealant of the present invention is described in detail hereinafter in accordance with Fig. 7 through Fig. 9 with reference to the drawings. Note that the same reference numerals are given to the same structures as in the first embodiment, and description thereof is omitted.

(Wedge Jig)
A wedge jig for forming a gap between the bead portion 14 and the rim 18 is described. As shown in Fig. 7, a wedge jig 22 of the present embodiment is block-shaped overall, and a top surface 22A and a bottom surface 22A are parallel to one another, and the wedge jig 22 has an inclined surface 22C as a wedge at one side portion (the arrow L direction side in Fig. 7), and has a vertical surface 22D at the other side portion (the arrow R direction side in Fig. 7). The inclined surface 22C is inclined with respect to the top surface 22A and the bottom surface 22B, and the vertical surface 22D is perpendicular to the top surface 22A and the bottom surface 22B. Further, a rectangular groove 22E is formed in the bottom surface side of the wedge jig 22.

Note that it is preferable that an angle θ, that is formed by the bottom surface 22B and the inclined surface 22C, be set to within a range of 30° to 60°.

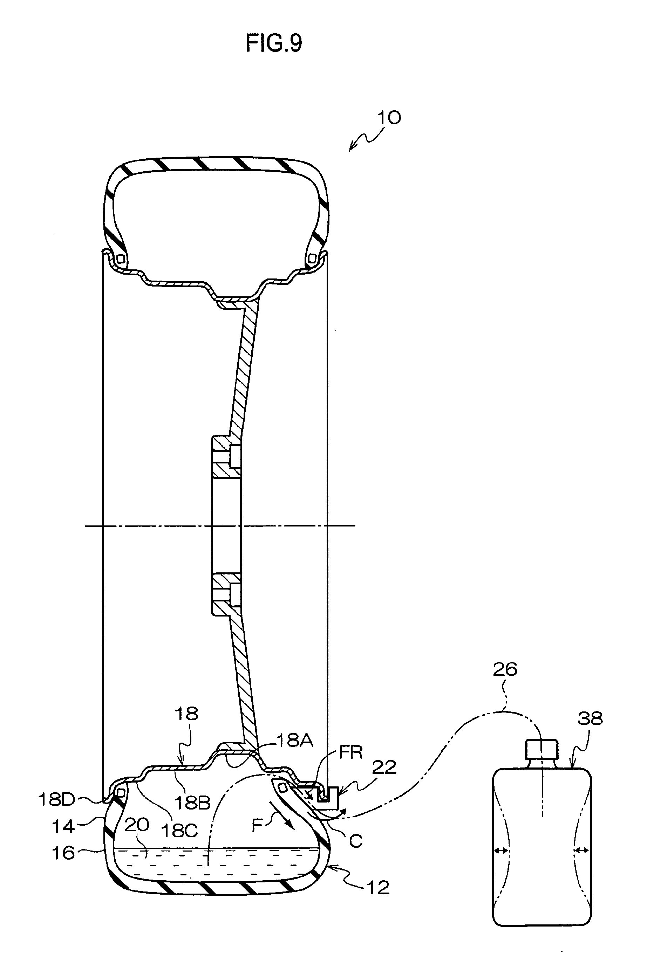

The wedge jig 22 can be mounted to the tire/rim assembly 10 as shown in Fig. 8 and Fig. 9. As shown in Fig. 8 and Fig. 9, when the wedge jig 22 is mounted to the rim 18 such that the flange 18D of the rim 18 is inserted in the groove 22E, the bottom surface 22B that is at the inclined surface side of the groove 22E is positioned on (at the tire radial direction outer side of) the bead seat portion 18C of the rim 18. Further, the distal end portion of the inclined surface 22C is positioned in a vicinity of the rim inner side end portion of the bead seat portion 18C, and the bead portion 14 through the side portion 16 of the pneumatic tire 12 are pressed by the inclined surface 22C, and the bead portion 14 is displaced further toward the rim inner side than the bead seat portion 18C, and a gap 24 (the mesh dot portion in Fig. 8) is formed between the bead portion 14 and the rim 18.

Next, the steps of recovering sealant are described.
(1) First, firstly, the air of the tire/rim assembly 10 is removed, and a gap is formed between the bead portion 14 and the rim 18 by using a tire lever or the like (second step), and, as shown in Fig. 8 and Fig. 9, the wedge jig 22 is inserted into the gap, and the flange 18D of the rim 18 is fit into the groove 22E of the wedge jig 22.
After the flange 18D of the rim 18 is fit into the groove 22E of the wedge jig 22, the tire lever or the like may be removed. Further, the distal end of the wedge jig 22 may be pushed-in between the bead portion 14 and the rim 18 and a gap may be formed between the bead portion 14 and the rim 18, without using a tire lever or the like.
Note that, because it is difficult to confirm, from the exterior, the position of the liquid surface of the sealant 20 within the tire, it is preferable that, before forming the gap between the bead portion 14 and the rim 18, the tire/rim assembly 10 is placed vertically and left for a while, and, after the sealant 20 at the interior gathers at the lower portion within the tire, the gap is formed above the axis of rotation and the wedge jig 22 is inserted.

(2) In a third step, one end of the tube 26 is inserted into the tire from the gap 24 that is at the side of the wedge jig 22 and that is formed between the rim 18 and the bead portion 14, and the other end of the tube 26 is connected to the elastically deformable container 38. The container 38 is formed from a flexible synthetic resin or the like. Note that the one end of the tube 26 is disposed so as to reach the bottom portion of the sealant 20.

Then, the container 38 is compressed (crushed) by a hand or the like and is elastically deformed, and the hand is successively relaxed and the container 38 opened. The container 38 thereby expands and the pressure of the container decreases, and therefore, the sealant 20 within the tire is sucked into the container 38. By repeating this plural times, all of the sealant 20 within the tire is removed and can be recovered in the container 38.
In this way, in the present embodiment, the sealant 20 within the tire can be recovered easily without cutting the tire valve by a cutter or the like and damaging the rim 18, and further, regardless of the type of the tire valve as well.
Note that, as shown by the two-dot chain line in Fig. 7, the entire length of the wedge jig 22 may be made to be long by extending the vertical surface 22D side for easy handling.

By the way, when the wedge jig 22 is inserted in the gap, as shown in Fig. 9, the portion of the bead portion 14 that contacts the wedge jig 22 (and the vicinity thereof) is forcibly pushed-in further toward the radial direction inner side and the tire inner side than the bead seat portion 18C of the rim 18. Therefore, force F (the direction thereof is an inclined direction that is the axial direction outer side and the radial direction outer side of the rim 18), that attempts to return to the original position (the position of riding on the bead seat portion 18C), acts on the portion of the bead portion 14 that contacts the wedge jig 22 (and the vicinity thereof). In the case of Fig. 9, a rotating force FR, that rotates in the direction of arrow C, arises at the wedge jig 22 due to the force F from the tire.
Note that, even if the wedge jig 22 receives the force F from the pneumatic tire 12 and attempts to rotate, the wedge jig 22 cannot rotate if the bead portion 14 is not pushed-up. Further, up to rotating to a certain extent, the wedge jig 22 does not come off of the rim 18.

In the wedge jig 22 of the present embodiment, because the angle θ that is formed by the bottom surface 22B and the inclined surface 22C is set to within a range of 30° to 60°, when the wedge jig 22 is inserted in the gap between the pneumatic tire 12 and the rim 18, the wedge jig 22 can be slid easily along the tire side surface, and, due thereto, the rotating force FR that attempts to cause the wedge jig 22 to come off of the rim 18 can be released. Accordingly, even in a case in which the pneumatic tire 12 is flat (especially, the aforementioned rotating force that attempts to make the wedge jig 22 come off is strong), the wedge jig 22 can be prevented from coming off of the tire/rim assembly 10.

However, if the aforementioned angle θ is less than 30°, when an attempt is made to intentionally rotate the wedge jig 22 in the direction opposite the rotating force FR, because the amount by which the bead portion 14 is pushed-up is small, the wedge jig 22 becomes able to rotate easily and it becomes easy for the wedge jig 22 to come off of the rim 18 (e.g., there is the concern that the wedge jig 22 will come off due to force of the extent of being touched by an operator during the recovery operation).
On the other hand, if the aforementioned angle θ exceeds 60°, because the angle θ of the inclined surface 22C is steep, it becomes easy for the rotating force FR that attempts to make the wedge jig 22 come off to be applied, and it becomes easy for the wedge jig 22 to come off.
Note that it is more preferable for the aforementioned angle θ to be set within the range of 40° to 50°.

### [Third Embodiment]

A wedge jig relating to a third embodiment of the present invention is described next. Note that the same reference numerals are given to the same structures as in the second embodiment, and description thereof is omitted.

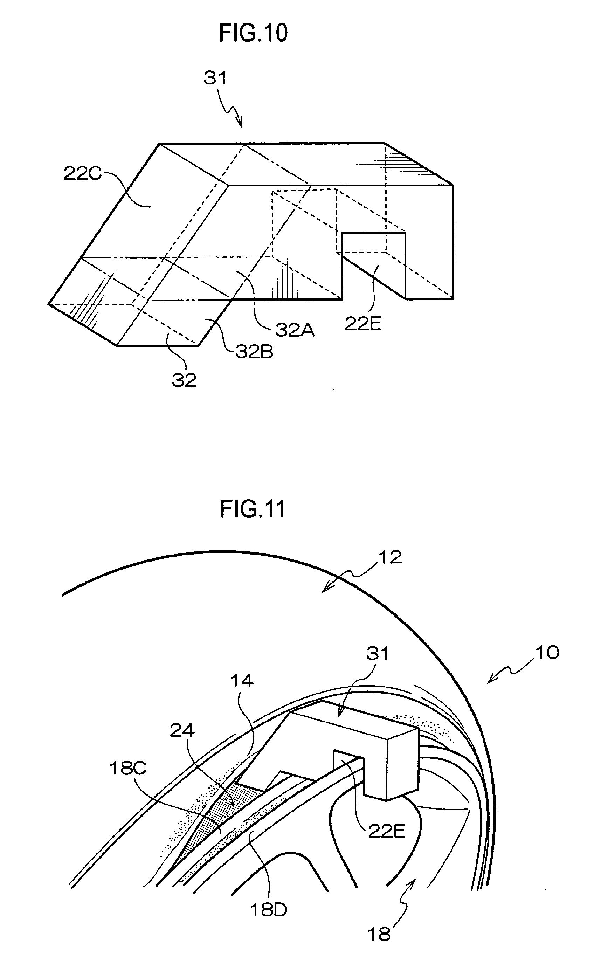

As shown in Fig. 10, at a wedge jig 31 of the present embodiment, the inclined surface 22C side is extended further in the well portion forming portion direction than the bead seat portion 18C (an extended portion 32A shown by the two-dot chain line is added), than at the wedge jig 22 of the second embodiment. The portion that is further toward the left side in the drawing than the two-dot chain line of Fig. 10 is the portion that is extended as compared with the wedge jig 22 of the second embodiment.

Further, by extending the inclined surface 22C further toward the lower side in the drawing (the rim radial direction inner side) in the well portion 18B direction that is at the wheel inner side than the bead seat portion 18C (an extended portion 32B shown by the solid lines is further added), an even larger gap can be maintained while the wheel - tire interval is made to be stable.

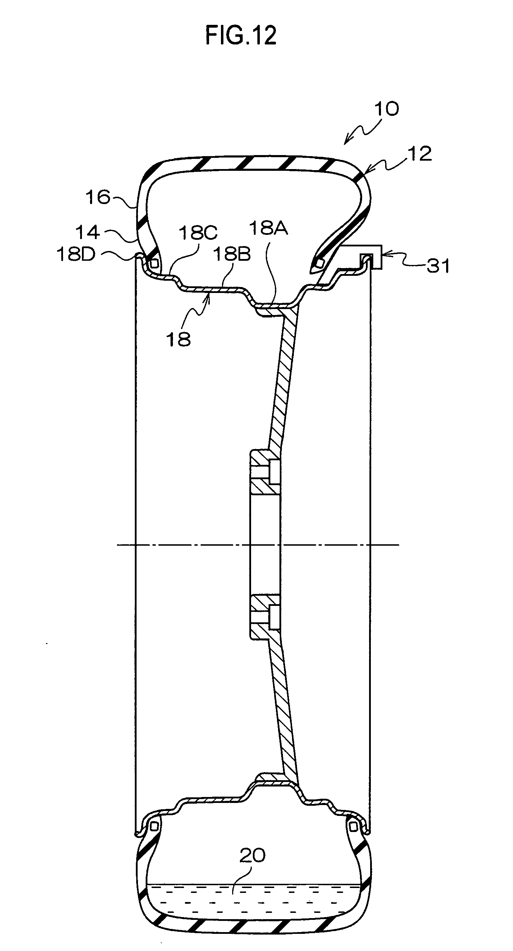

As shown in Fig. 11 and Fig. 12, by using the wedge jig 31 of the present embodiment, the bead portion 14 can be displaced more toward the rim inner side, the dimension of the gap 24 can be made to be larger, the tube 26 can be made to be bigger (e.g., a tube of φ 8 mm can be used) and the recovery time of the sealant 20 can be made to be shorter, than in the first embodiment. Further, due to the gap 24 becoming larger, insertion of the tube 26 also becomes easy.

[Fourth Embodiment]
The wedge jig 31 relating to a fourth embodiment of the present invention is described next. Note that the wedge jig 31 of the present embodiment is a modified example of the wedge jig 31 of the third embodiment, and the same reference numerals are given to the same structures as in the third embodiment, and description thereof is omitted.

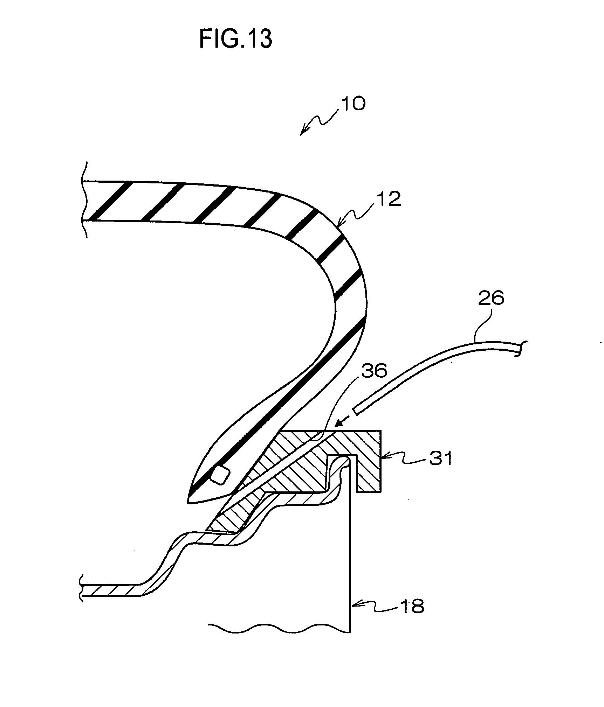

As shown in Fig. 13, a tube hole 36, that communicates the tire interior and exterior when the wedge jig 31 is mounted to the rim 18, is formed in the wedge jig 31 of the present embodiment.

When using the wedge jig 31 of the present embodiment, the tube 26 is inserted into the tire from the tube hole 36, and recovery of the sealant 20 can be carried out.

### [Fifth Embodiment]

In the present embodiment, in order to reduce friction with the pneumatic tire 12, before the wedge jig 31 is inserted for example, a lubricant is coated on the inclined surface 22C that contacts the pneumatic tire 12.

For example, bead cream, car wax, tire wax, or the like can be used as the lubricant, and a known lubricant can be used provided that it can reduce friction with the pneumatic tire 12 and does not deteriorate the rubber of the tire, and the material and the properties of the lubricant do not particularly matter.

Note that a sheet of a resin having a coefficient of friction that is lower than that of the material of the wedge jig 31, e.g., a fluorine based resin, may be adhered to, or a fluorine based resin may be coated on the inclined surface 22C of the wedge jig 31, or the like.

If the pneumatic tire 12 does not slide on the inclined surface 22C of the wedge jig 31 when the wedge jig 31 is inserted between the pneumatic tire 12 and the rim 18, the force by which the pneumatic tire 12 attempts to return to its original shape acts on the region of contact between the pneumatic tire 12 and the wedge jig 31. As a result, because force that attempts to make the wedge jig 31 come off of the rim 18 works on the wedge jig 31, there are cases in which the wedge comes off of the rim if not held by a hand or the like.

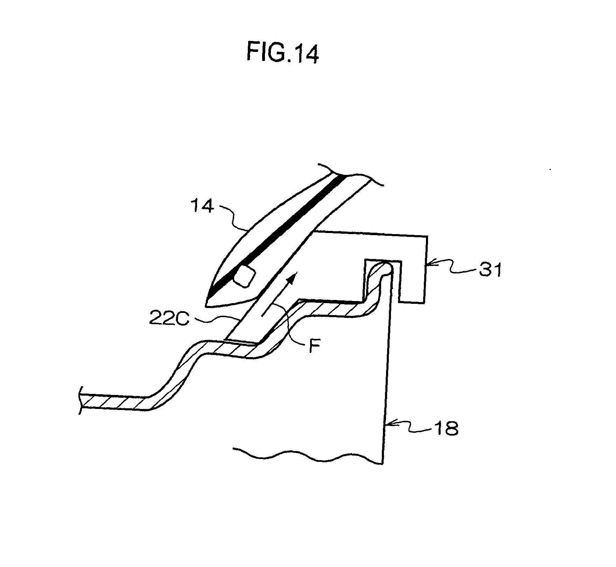

In the present embodiment, because a lubricant is coated on the inclined surface 22C of the wedge jig 31, the frictional resistance of the region of contact between the wedge jig 31 and the pneumatic tire 12 is lowered, the pneumatic tire 12 slides on the inclined surface 22C of the wedge jig 31 toward the top surface 22A side, the force received from the pneumatic tire 12 is released, and the inserted wedge jig 31 is held stably between the rim 18 and the pneumatic tire 12 without the force F (see Fig. 14) that attempts to make the wedge jig 31 come off of the rim 18 working on the pneumatic tire 12. Accordingly, there is no need to continue to hold the inserted wedge jig 31 by a hand or the like, and the sealing recovery work is facilitated. Further, by coating a lubricant on the wedge jig 31, the wedge jig surface can be slid reliably regardless of which region of the tire contacts the wedge jig 31.

Note that, when a gap is formed between the bead portion 14 and the rim 18 by pushing the distal end of the wedge jig 31 in between the bead portion 14 and the rim 18 without using a tire lever or the like, if a lubricant is used, the friction with the bead portion 14 is reduced, and therefore, the pushing-in work is facilitated.
In the present embodiment, the lubricant is coated on the inclined surface 22C. However, a lubricant may be coated on the pneumatic tire 12 provided that the lubricant can be coated on the region of contact between the pneumatic tire 12 and the wedge jig 31.
The present embodiment describes an example of coating a lubricant on the wedge jig 31, but even if a lubricant is coated on the above-described wedge jig 22, operation and effects that are similar to those of the case of coating a lubricant on the wedge jig 31 can of course be obtained.

### [Sixth Embodiment]

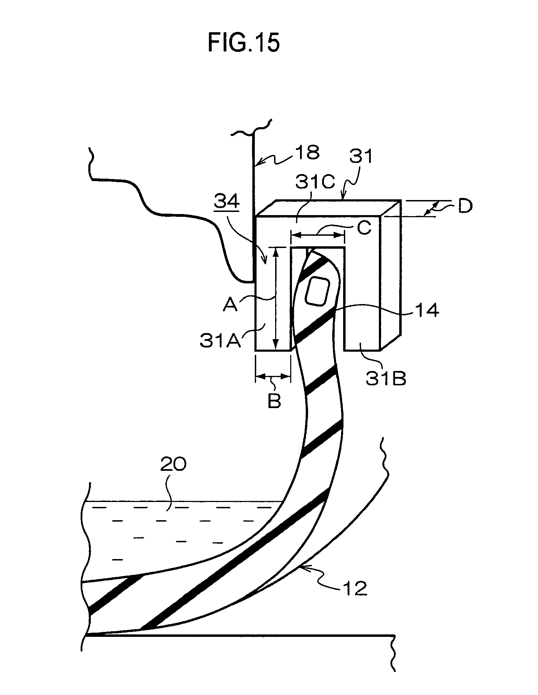

Next, the wedge jig 31 relating to a sixth embodiment of the present invention is described in accordance with Fig. 15.

As shown in Fig. 15, this wedge jig 31 presents a substantially U-shaped configuration in front view, and has a first portion 31 A that is inserted between the rim 18 and the bead portion 14, a second portion 31B that is disposed at the outer surface side of the bead portion 14, and a third portion 31C that connects one end of the first portion 31A and one end of the second portion 31B.

Here, given that the length of the first portion 31A shown in Fig. 15 is A, the width of the first portion 31 A is B, an interval between the first portion 31 A and the second portion 31B is C and the overall thickness is D, when this wedge jig 31 is used in the tire/rim assembly 10 for a passenger vehicle, it is preferable that 10 mum ≤ A ≤ 20 mm, 10 mm ≤ B ≤ 40 mm, and it is preferable that C is a dimension such that the bead portion 14 can be easily inserted, and that D is a dimension such that the wedge jig 31 is stable without falling over between the rim 18 and the bead portion 14, e.g., greater than or equal to 5 mm.

The material of the wedge jig 31 is preferably formed of a synthetic resin (e.g., PP or the like) so as to not damage the rim 18, but may be a material other than a synthetic resin.

The tire/rim assembly 10, from which the bead portion 14 is taken off, is taken-off of the tire changer 28 and placed on the floor or the like so as to be oriented vertically. The wedge jig 31 is inserted-in between the bead portion 14 that has been taken-off and the rim 18, and forms the gap 34 between the bead portion 14 and the rim 18.

Note that, at the wedge jig 31 that is used in the present embodiment, because the width B of the first portion 31A that is inserted between the rim 18 and the bead portion 14 is in a range of 10 to 40 mm, the relatively large gap 34 that is needed to see the tire interior can be formed between the rim 18 and the bead portion 14.
Accordingly, it is easy to see the sealant 20 at the interior and the distal end of the tube 26, and the distal end of the tube 26 can be made to reach the sealant 20, and the sealant 20 can be reliably sucked and recovered (note that, merely by taking the bead portion 14 off by a tire lever or the like, the force by which the bead portion 14 attempts to return toward the rim flange works, and a gap that is sufficient in order to see the tire interior cannot be formed).
With the width B of the first portion 31 A being less than 10 mm, it is difficult to see the tire interior. On the other hand, if the width B of the first portion 31A exceeds 40 mm, it is difficult to insert the first portion 31 A between the rim 18 and the bead portion 14.

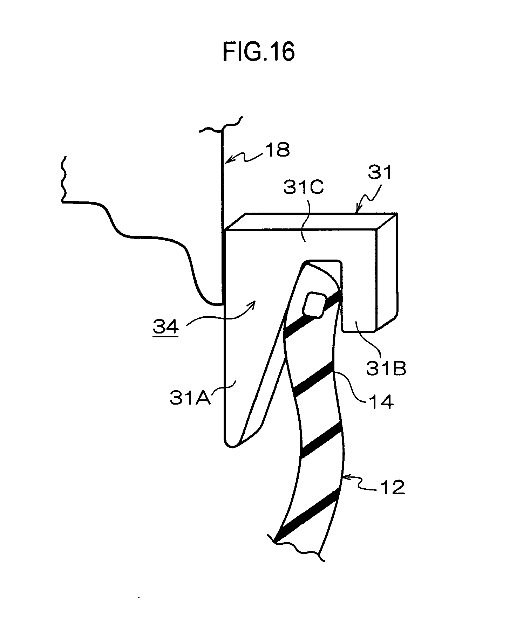

Note that the shape of the wedge jig 31 is not limited to that shown in Fig. 15, and may be the shape shown in Fig. 16. At the wedge jig 31 shown in Fig. 16, the first portion 31A is taper shaped and is easily inserted between the bead portion 14 and the rim 18.
Note that the dimensions of the wedge jig 31 are not limited to the above values, and are changed appropriately in accordance with the tire type, the tire size, and the like.

(Experimental Example 2)
Methods of recovering sealant in accordance with the present invention (examples 1 and 2) and conventional methods of recovering sealant (conventional examples 1 through 4) were implemented, and a comparison of workability was carried out. The results are as shown in following Table 2. The "valve cutting + coagulant" in the form column means that coagulant is thrown-into the interior from the hole after the valve is removed, and "valve cutting + syringe" means that the sealant is sucked-out by a syringe from the hole after the valve is removed. Further, "rim disassembling + coagulant" means that a gap is formed between the tire and the rim, and thereafter, a coagulant is thrown-into the interior from this gap, and "rim disassembling + syringe" means that a gap is formed between the tire and the rim, and thereafter, the sealant is sucked-out by a syringe from this gap.

On the other hand, "low flat tire" in the workability column means using a tire whose flatness rate is less than or equal to 50%, and "metal valve" is a structure in which the valve main body is fixed to the rim by a screw, a nut or the like, and therefore, means a structure that is difficult to be taken-off or cannot be taken-off only from the rim outer side. Further, "○" in the workability column shows that the workability is good, "x" shows that the workability is poor or the work cannot be carried out, and "⊚" shows that the workability is good even if the wedge jig is not held by a hand or the like.

**[Table 2]**

| | form | workability | |
|---|---|---|---|
| | | metal valve | low flat tire |
| example 1 | bead drop + wedge jig (22) + insert tube in from lateral gap of wedge jig, and suck sealant | ○ | ○ |
| example 2 | bead drop + wedge jig (31) + insert tube in from lateral gap of wedge jig, and suck sealant | ○ | ○ |
| example 3 | bead drop + wedge jig (22) + insert tube in from tube hole of wedge jig, and suck sealant | ○ | ○ |
| example 4 | bead drop + wedge jig (31) + insert tube in from tube hole of wedge jig, and suck sealant | ○ | ○ |
| example 5 | bead drop + wedge jig (22) at which lubricant is applied to wedge jig contact surface with tire + insert tube in from lateral gap of wedge jig, and suck sealant | ⊚ | ⊚ |
| example 6 | bead drop + wedge jig (31) at which lubricant is applied to wedge jig contact surface with tire + insert tube in from lateral gap of wedge jig, and suck sealant | ⊚ | ⊚ |
| example 7 | bead drop + wedge jig (22) at which lubricant is applied to wedge jig contact surface with tire + insert tube in from tube hole of wedge jig, and suck sealant | ⊚ | ⊚ |
| example 8 | bead drop + wedge jig (31) at which lubricant is applied to wedge jig contact surface with tire + insert tube in from tube hole of wedge jig, and suck sealant | ⊚ | ⊚ |
| conventional example 1 | valve cutting + coagulant | difficult to remove or impossible to remove from exterior | ○ |
| conventional example 2 | valve cutting + syringe | difficult to remove or impossible to remove from exterior | ○ |
| conventional example 3 | rim disassembling + coagulant | ○ | × |
| conventional example 4 | rim disassembling + syringe | ○ | × |

There are cases in which the methods of conventional examples 1, 2 cannot be applied to a rim using a metal valve.

In the methods of conventional examples 3, 4, in a case in which the tire is low flat (e.g., a flatness rate of less than or equal to 50%), if rim disassembly is carried out by a tire changer that holds the tire/rim assembly horizontally, when the gap is formed between the bead portion of the tire and the rim, the sealant at the interior leaks-out from this gap, and the surroundings, such as the tire changer and the like, are contaminated.

On the other hand, in the methods of examples 1 through 8 to which the present invention is applied, the sealant within the tire can be recovered easily regardless of the tire valve and the flatness rate of the tire, and without contaminating the surroundings by the sealant.

### (Experimental Example 3)

Plural types of wedge jigs having different angles of the inclined surface were prepared, and a comparison of workability was carried out.

The "○" in the workability column shows that the workability is good, and the "⊚" shows that the workability is particularly good.

**[Table 3]**

| angle θ | workability | |
|---|---|---|
| | metal valve | low flat tire |
| 65.0° | ⊚ | ○ ∼ △ (easy to come off if not particularly careful) |
| 57.5° | ⊚ | ⊚ |
| 45° | ⊚ | ⊚ |
| 32.5° | ⊚ | ⊚ |
| 27.5° | ⊚ | ○ |

From the experimental results, it is understood that, when working with a low flat tire, there is a suitable range for the angle of the inclined surface of the wedge jig in order to keep the workability particularly good.

### DESCRIPTION OF THE REFERENCE NUMERALS

- 10: tire/rim assembly

- 12: pneumatic tire
- 14: bead portion
- 18: rim
- 18C: bead seat
- 20: sealant
- 22: wedge jig
- 22B: bottom surface
- 22C: inclined surface (pushing surface)
- 22E: groove (groove portion)
- 28: tire changer
- 31: wedge jig
- 36: tube hole (through-hole)
- θ: angle

## Claims

1. A method of recovering sealant for recovering a liquid sealant from an interior of a tire/rim assembly in which a pneumatic tire is mounted to a rim, comprising:
a first step of canceling engagement of one bead portion and the rim;
a second step of forming a gap between the one bead portion and the rim; and
a third step of inserting a suction means from the gap into the tire/rim assembly interior, and sucking the sealant.

2. The method of recovering sealant of claim 1, wherein, in the second step, the tire/rim assembly that has undergone the first step is held at a tire changer, and a member for forming a gap is inserted-in between the one bead portion and the rim.

3. The method of recovering sealant of claim 1, wherein, in the second step, after the tire/rim assembly that has undergone the first step is disposed so as to be oriented vertically, a member for forming a gap is inserted-in between the one bead portion and the rim.

4. The method of recovering sealant of claim 1, wherein, in the second step, the tire/rim assembly is disposed so as to be oriented sideways with the one bead portion, at which engagement with the rim is cancelled, being at an upper side, and thereafter, a member for forming a gap is inserted-in between the one bead portion, at which engagement with the rim is cancelled, and the rim.

5. The method of recovering sealant of claim 1, wherein, in the second step, the tire/rim assembly is disposed at an incline with the one bead portion, at which engagement with the rim is cancelled, being at an upper side, and thereafter, a member for forming a gap is inserted-in between the one bead portion, at which engagement with the rim is cancelled, and the rim.

6. The method of recovering sealant of claim 4 or claim 5, wherein the member is a wedge, and in the third step, a tube serving as the suction means is inserted into the tire from the gap, and sucks the sealant within the tire.

7. The method of recovering sealant of claim 6, wherein a lubricant is provided at a region at which the wedge and the pneumatic tire contact.

8. The method of recovering sealant of claim 7, wherein the lubricant is provided at the wedge.

9. The method of recovering sealant of any one of claim 1 through claim 8, wherein, in the first step, the tire/rim assembly is held at a tire changer, and the engagement of the one bead portion and the rim is cancelled at the tire changer.

10. A wedge jig that is used in the method of recovering sealant of any one of claim 6 through claim 8 and that is for forming, between a bead portion and a rim, a gap into which a tube for sucking sealant can be inserted, comprising:
a groove portion into which a flange of the rim is inserted; and
a pushing surface that, when the flange is inserted in the groove portion, pushes a side surface of the bead portion toward a rim transverse direction inner side, and forms a gap between the rim and the bead portion.

11. The wedge jig of claim 10, wherein an angle θ that is formed by a bottom surface, at which the groove portion is formed, and the pushing surface is set within a range of 30° to 60°.

12. The wedge jig of claim 10 or 11, wherein, when the flange is inserted in the groove portion, the pushing surface is positioned further toward the rim transverse direction inner side than a bead seat of the rim.

13. The wedge jig of claim 12, comprising:
a through-hole through which the tube can be inserted,
wherein, when the flange is inserted in the groove portion, one end portion of the through-hole faces a tire inner side, and another end faces a tire outer side.
